(19) Europäisches Patentamt / European Patent Office / Office européen des brevets

(11) **EP 3 935 318 B1**

(12) **EUROPÄISCHE PATENTSCHRIFT**

(45) Veröffentlichungstag und Bekanntmachung des Hinweises auf die Patenterteilung:
**21.08.2024   Patentblatt 2024/34**

(21) Anmeldenummer: **20713528.6**

(22) Anmeldetag: **09.03.2020**

(51) Internationale Patentklassifikation (IPC):
**F24D 13/02** *(2006.01)*     **H05B 3/26** *(2006.01)*

(52) Gemeinsame Patentklassifikation (CPC):
**F24D 13/024; H05B 3/26;** H05B 2203/032;
Y02B 30/00

(86) Internationale Anmeldenummer:
**PCT/EP2020/056184**

(87) Internationale Veröffentlichungsnummer:
**WO 2020/182717 (17.09.2020 Gazette 2020/38)**

(54) **TEMPERIERUNGSSYSTEM**

TEMPERATURE CONTROL SYSTEM

SYSTÈME DE THERMORÉGULATION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **08.03.2019   DE 102019105990**

(43) Veröffentlichungstag der Anmeldung:
**12.01.2022   Patentblatt 2022/02**

(73) Patentinhaber: **Zeyn, Klaus**
**80639 München (DE)**

(72) Erfinder: **Zeyn, Klaus**
**80639 München (DE)**

(74) Vertreter: **2s-ip Schramm Schneider Bertagnoll Patent- und Rechtsanwälte Part mbB**
**Postfach 86 02 67**
**81629 München (DE)**

(56) Entgegenhaltungen:
WO-A1-96/27271     DE-A1- 3 009 800
DE-A1- 3 932 101     DE-U1- 202016 107 401

**Beschreibung**

Gebiet der Erfindung

Die Erfindung betrifft ein Temperierungssystem, das insbesondere dazu geeignet ist, einen Raum, etwa den Raum eines Gebäudes, zu temperieren. Ein solches Temperierungssystem ist aus Dokument WO96/27271 bekannt.

Hintergrund der Erfindung

Der Klimawandel und die daraus hervorgehende erforderliche Energiewende umfasst die drei Sektoren Strom, Wärme und Mobilität und erfordert eine Abkehr von fossilen Brennstoffen als Energieträger. Als Folge dessen werden konventionelle Heizsysteme an Bedeutung verlieren und durch neuartige Systeme, die durch regenerative Energiequellen gespeist werden können, ersetzt.

Im Stand der Technik sind verschiedene Heizsysteme bekannt, die heute noch größtenteils mit fossilen Brennstoffen betrieben werden, und neuere Systeme, wie Wärmepumpen, Blockheizkraftwerke, Solarthermie und andere. Diese Systeme beruhen primär auf dem Konvektionsheizprinzip.

Bei diesen Systemen wird ein Medium, wie zum Beispiel Wasser, durch ein zentrales Heizgerät erwärmt und dann über Zuleitungen an in den zu erwärmenden Räumen angeordnete Konvektoren verteilt. Diese Konvektoren übertragen durch Konvektion ihre Wärme an die Raumluft, wobei anzumerken ist, dass Luft als schlechter Wärmeträger einzustufen ist.

Die erwärmte Raumluft steigt in den oberen Bereich des Raumes auf, während die kältere Luft sich in den unteren Bereichen des Raumes verteilt, wo sich der Raumnutzer befindet. Als Folge ist ein hoher Energieaufwand für eine ausreichende Raumlufttemperatur erforderlich.

Der Temperaturunterschied zwischen den verschiedenen Bereichen des Raumes führt zu einer Luftzirkulation, die eine für Allergiker problematische Staubverwirbelung im Raum verursacht.

Diese Nachteile herkömmlicher Systeme, die selbst bei neuartigen elektrischen Heizsystemen wie Luft-Wärmepumpen bestehen, führt zu einer hohen Trägheit der Systeme, was im Widerspruch zu der von der Energiewende geforderten Energiesuffizienz (energieverbrauchsrelevantes Konsum- und Nutzungsverhalten, z.B. durch bedarfsspezifische Heizprofile) steht.

Ein weiterer Nachteil an der Konvektion ist, dass durch den Temperaturaustausch der Luftschichten im Raum kalte Luft über die Wände streicht und dort Kondensationsfeuchte entsteht. Durch die aktuelle Dämmtechnik in Gebäuden mittels Wärmedämmverbundsystemen (WDVS) und deren Luftdichtheit bildet die Kombination von Konvektionsheizung und WDVS den Nährboden für Schimmelbildung, was sowohl zu gesundheitlichen als auch bauphysikalischen Problemen führen kann.

Der Luftdichtheit und die Gefahr der Schimmelbildung, insbesondere bei mit WDVS gedämmten Gebäuden, wird durch den Einsatz von Lüftungssystemen begegnet. Daraus folgernd erhöhen sich die wirtschaftlichen wie handwerklichen Aufwände bei Bauvorhaben.

Ein weiterer Nachteil dieser Systeme liegt in Ihren relativ hohen Materialkosten. Einhergehend mit einer zeitintensiven Installation die, von speziellen Gewerken auszuführen ist, ergeben sich hohe Gesamtkosten, während sich der spezifische Wärmebedarf für das Beheizen von Räumen aufgrund der Energieeinsparungsverordnungen (ENEV) ständig reduziert. Damit stehen die relativ hohen Anschaffungskosten und der Installationsaufwand der herkömmlichen Systeme nicht mehr im Verhältnis zur erforderlichen Wärmeerzeugung.

Als nachteilig bei diesen Systemen können auch der Aufwand und die Komplexität der Installation angesehen werden, da diese speziell geschultes Personal erforderlich machen und der steigende Fachkräftemangel eine Verzögerung und einhergehend Verteuerung von Vorhaben zur Folge hat.

Als Alternative zu Konvektionsheizungen ist das Prinzip der Wärmestrahlung auf zuführen. Die Wärmestrahlung ist eine Art der Wärmeübertragung, bei der Wärme durch elektromagnetische Wellen (infrarote (IR) Strahlung, infrarotes Licht) übertragen wird.

Hierbei wird im Gegensatz zu konvektiven Systemen nicht die Luft als Wärmeträger verwendet sondern die Wände und feste Körper im Raum, welche die Strahlungswärme speichern und in den Raum emittieren.

Die heute in Gebäuden primär verwendete Wärmedämmung mittels z.B. Dämmstoffen auf Basis von Polystyrol führt hierbei zu beträchtlichen Wärmeverlusten, da diese WDVS Materialien einen Emissionsgrad $\varepsilon$ von ca. 0,6 aufweisen und somit Wärmeverlusten durch Abstrahlung aus dem Raum nur bedingt entgegenwirken.

Es gibt unterschiedliche Arten von Strahlungsheizsystemen, welche in der Regel als ohmsche Widerstandsheizungen umgesetzt werden. Aktuelle Ausführungen weisen primär mäanderförmige Heizdrähte auf, wobei durch Anlegen einer elektrischen Spannung ein Stromfluss durch den Heizdraht erfolgt und aufgrund des Eigenwiderstandes des Heizdrahtes nach dem Ersten Jouleschen Gesetz der elektrische Strom in dem elektrischen Leiter Wärmeenergie erzeugt.

Der Heizdraht mäanderförmiger drahtgebundener Heizelemente weist üblicherweise einen Durchmesser von unter 1 mm auf. Damit haben diese Systeme einen sehr geringen Heizflächenanteil in Bezug auf die Gesamtgröße des Heizsystems. Als Folge hiervon muss relativ viel Energie aufgewandt werden, um die gesamte Heizfläche zu erwärmen. Dadurch erhöht sich der Energiebedarf dieser Systeme um eine Fläche wie einen Raum zu erwärmen.

Ein weiterer Nachteil des kleinen Flächenanteils der Heizdrähte erschließt sich bei Studieren des Stefan-Boltzmannschen Strahlungsgesetzes. Der lineare Einfluss des Heizflächenanteils an der resultierenden Wärmestrahlungsleistung Qw erschließt sich aus dem Stefan-Boltzmann Gesetz zur Berechnung von Strahlungs-/Wärmestrahlungsleistungen nicht schwarzer Körper:

$$Q_w = \sigma * \varepsilon * A * T^4$$

mit

$Q_w$ = Wärmestrahlungsleistung eines Körpers in W / m$^2$

$\sigma$ = Stefan Boltzmann Konstante 5,67

$\varepsilon$ = Emissionsgrad eines Körpers

A = Fläche eines Körpers

T = absolute Temperatur eines Körpers in K

Aus anderen Bereichen der Technik ist die Verwendung von z.B. polymerbasierten Folien mit eingebetteter Kohlenstoffbeschichtung für die Umsetzung von Flächenheizsystemen, z.B. im Wohnbereich, wo diese beispielsweise im Fußboden und Wandbereich eingesetzt werden, bekannt. Hierbei wird ein elektrisch leitfähiges Material mit einem definierten Kohlenstoffanteil als ohmscher Widerstand großflächig zwischen zwei stromführenden Leiterbahnen aufgebracht. Durch Anlegen einer Spannung an Kontaktpunkte der Leiterbahnen erfolgt ein Stromfluss durch die Kohlenstoffschicht und aufgrund des Eigenwiderstandes der Kohlenstoffschicht wird nach dem Ersten Jouleschen Gesetz in dem elektrischen Leiter Wärmeenergie erzeugt.

Aufgabe der Erfindung

Eine der Erfindung zugrunde liegende Aufgabe besteht somit darin, Lösungen zum Temperieren eines Raumes, etwa ein Raum eines Gebäudes, bereitzustellen, die die aus dem Stand der Technik bekannten Nachteile zumindest teilweise vermeiden. Hierbei soll es unerheblich sein, ob es bei dem Gebäude, dessen Räume temperiert werden sollen, um einen Neu- oder Altbau handelt. Die Lösungen zum Temperieren eines Raumes sollen zudem kostengünstig sein und einfach und leicht zu installieren sein und gleichzeitig eine effizientere, umweltschonendere und kostengünstigere Temperierung eines Raumes ermöglichen.

Erfindungsgemäße Lösung

Diese Aufgabe wird erfindungsgemäß durch die Merkmale des unabhängigen Anspruchs 1 gelöst. Vorteilhafte Ausgestaltungen der Erfindung sind in den abhängigen Ansprüchen angegeben.

Bereitgestellt wird demnach ein Temperierungssystem zum Temperieren eines Raumes, umfassend

-   ein Heizelement mit einer dem Raum zugewandten Oberfläche und einer dem Raum abgewandten Oberfläche,
-   ein Isolations- und/oder Reflexionselement, das beabstandet zum Heizelement und an der dem Raum abgewandten Oberfläche des Heizelements angeordnet oder anordenbar ist, sodass zwischen dem Isolations- und/oder Reflexionselement und dem Heizelement ein innerer Luftspalt ausgebildet wird oder ausbildbar ist, wobei das Isolations- und/oder Reflexionselement wärmeisolierend und IR-Strahlen reflektierend ausgestaltet ist, und
-   ein erstes Abstandelement, das an der dem Raum abgewandten Oberfläche des Isolations- und/oder Reflexionselement angeordnet oder anordenbar ist, um zwischen dem Isolations- und/oder Reflexionselement und einer Wand des Raumes einen äußeren Luftspalt auszubilden.

Beide Luftspalte, d.h. der innere Luftspalt und der äußere Luftspalt sind demnach an der dem Raum abgewandten Seite des Heizelements ausgebildet.

Gemäß der Erfindung ist das Isolations- und/oder Reflexionselement flächig ausgestaltet und beidseitig IR-Strahlen reflektierend ausgestaltet.

Zwischen dem Isolations- und/oder Reflexionselement und dem Heizelement ist ein zweites Abstandselement angeordnet, wobei das zweite Abstandselement eine offene gitter- oder wabenförmige Struktur aufweist, sodass innerhalb der offenen Gitter- oder Wabenstruktur der innere Luftspalt ausgebildet wird oder ausbildbar ist.

Vorteilhaft kann es sein, wenn an der dem Raum abgewandten Oberfläche des Heizelements ein Wärmespeicher angeordnet oder anordenbar ist.

Hierbei kann es vorteilhaft sein, wenn der Wärmespeicher zwischen dem Heizelement und dem Isolations- und/oder Reflexionselement und beabstandet zum Isolations- und/oder Reflexionselement angeordnet ist.

An der dem Raum zugewandten Oberfläche des Heizelements kann ein Wärmeträger angeordnet oder anordenbar sein.

In einer Ausgestaltung der Erfindung können der Wärmeträger, das Heizelement und der Wärmespeicher in Wärme leitendem Kontakt stehen.

In einer vorteilhaften Ausgestaltung der Erfindung können der Wärmeträger, das Heizelement und der Wärmespeicher zusammen als Verbundelement ausgestaltet sein.

Der besondere Vorteil liegt hierbei darin, dass sich durch den Verbund mehrerer Einzelelemente zu einem Verbundbauteil, welches aus einem Heizelement, einem Wärmeträger und einem Wärmespeicher aufgebaut ist, wobei der gesamte Verbund in wärmeleitendem Kontakt steht und sowohl dem Wärmespeicher als auch dem Wärmeträger während des Aufheizvorgangs über das Heizelement Wärme zugeführt werden, eine besonders einfache Installation des erfindungsgemäßen Temperierungssystem realisieren lässt.

In Kombination mit dem Isolations- und/oder Reflexionselement, welches vorzugsweise zwischen zwei Luftschichten bzw. zwischen zwei Luftspalte angeordnet ist, kann ein Temperierungssystem geschaffen werden, welches sich effizient und energiesparend betreiben lässt, die elektrische Anschlussleistung zum Beheizen eines Raumes reduziert sowie den sommerlichen Hitzeschutz unterstützt. Damit kann das erfindungsgemäße Temperierungssystem einerseits zum winterlichen und andererseits zum sommerlichen Temperieren eines Raumes verwendet werden.

Das Isolations- und/oder Reflexionselement und gegebenenfalls das zweite Abstandselement können Teil des Verbundelements sein.

Damit wird eine noch höhere Integration des erfindungsgemäßen Temperierungssystems erreicht, wodurch gleichzeitig eine noch einfachere Installation des erfindungsgemäßen Temperierungssystems ermöglicht wird.

Bei dem Temperierungssystem kann es vorteilhaft sein, wenn das Heizelement

- eine leitfähige Beschichtung, die mit elektrischer Energie beaufschlagbar ist,
- einen Heizdraht, insbesondere einen mäanderförmig verlaufenden Heizdraht,
- eine Wasserleitung, insbesondere eine mäanderförmig verlaufende Wasserleitung, die mit Warmwasser beaufschlagbar ist,
- und Kombinationen hiervon

umfasst.

Das Isolations- und/oder Reflexionselement kann hierbei

- eine hochglänzende Metallfolie, insbesondere Aluminiumfolie, oder
- ein Verbundfolie, die zumindest eine IR-Strahlen reflektierende Schicht und zumindest eine als Luftpolster ausgestaltete Schichten aufweist,

umfassen.

Das erfindungsgemäße Temperierungssystem kann zum winterlichen und/oder sommerlichen Temperieren eines Raumes, wie den Raum eines Gebäudes, verwendet werden. Das erfindungsgemäße Temperierungssystem kann an der Wand, an der Decke oder am Boden des Raumes angebracht werden. Bei dem erfindungsgemäßen Temperierungssystem heizt das Heizelement den Wärmeträger zur Erzeugung von Infrarot-Strahlungswärme auf. Vorteilhaft ist ferner, dass der Wärmespeicher in der Heizphase Wärmeverluste, der vom Heizelement und vom Wärmeträger abgehenden Wärmeenergie, aufnimmt und bei Inaktivität des Heizelementes für eine zeitlich verlangsamte Abkühlphase des Verbundbauteils sorgt. Ein weiterer Vorteil ist zudem, dass in der Sommerperiode ein sommerlicher Hitzeschutz unterstützt wird, indem die Tageshöchsttemperatur, die mit zeitlicher Verschiebung (Phasenverschiebung) die Gebäudehülle von der Außenseite zur Innenseite durchwandert , durch Pufferung (Amplitudendämpfung) nur in geringen Mengen an den Innenraum weitergegeben wird.

Durch die beabstandete Anordnung des Isolations- und/oder Reflexionselement zur Wand bzw. zur Gebäudehülle und zum Heizelement bzw. zum Wärmespeicher wird an beiden Seiten des Isolations- und/oder Reflexionselement eine Luftschicht bzw. ein Luftspalt gebildet (innere und äußere ruhende Luftschicht), wodurch eine Wärmeverlagerung von der Gebäudehülle bzw. von der Wand ins Rauminnere sowie vom Rauminneren zur Gebäudehülle bzw. zur Wand wirksam verringert wird. Das Isolations- und/oder Reflexionselement wirkt hierbei als Innendämmung. Strahlungswärme, die von dem Heizelement und/oder vom Wärmespeicher emittiert wird, wird in den Raum zurückreflektiert und somit Strahlungswärmeverluste über die Gebäudehülle bzw. über die Wand reduziert wird. Zudem kann eine sommerliche Aufheizung des Raumes reduziert werden, indem durch das Isolations- und/oder Reflexionselement exogene Strahlungsenergie, wie beispielsweise Solarstrahlung, Diffusstrahlung, Umgebungsstrahlung und dergleichen zur Gebäudeaußenhülle bzw. zur Wand reflektiert wird. zu gewährleisten.

In einer Ausgestaltung der Erfindung kann das Temperierungssystems mit einem Steuerungssystem gekoppelt sein, wobei das Steuerungssystem angepasst ist, eine Oberflächentemperatur des Temperierungssystems oder des Verbundbauteils zu erfassen und in Abhängigkeit von der erfassten Oberflächentemperatur das Temperierungssystem oder das Verbundelement mit einer elektrischen Spannung zu beaufschlagen. Damit kann die Energieeffizienz erheblich verbessert werden.

Das Steuerungssystem kann ein Thermostat umfassen, der mit einem auf dem Temperierungssystem oder auf dem Verbundelement aufgebrachtem Temperatursensor die aktuelle Oberflächentemperatur misst und in Abhängigkeit davon, ob die aktuelle Oberflächentemperatur die Grenzwerte einer eingestellten Schaltdifferenz (Hysterese) des Steuerungsgerätes unter- oder überschreitet die Spannungsversorgung zur Beaufschlagung des Verbundbauteils aktiviert oder deaktiviert.

Beschreibung der Figuren

Weitere Einzelheiten und Merkmale der Erfindung sowie konkrete, insbesondere vorteilhafte Ausführungsbeispiele der Erfindung ergeben sich aus der nachfolgenden Beschreibung in Verbindung mit der Zeichnung. Es zeigt:

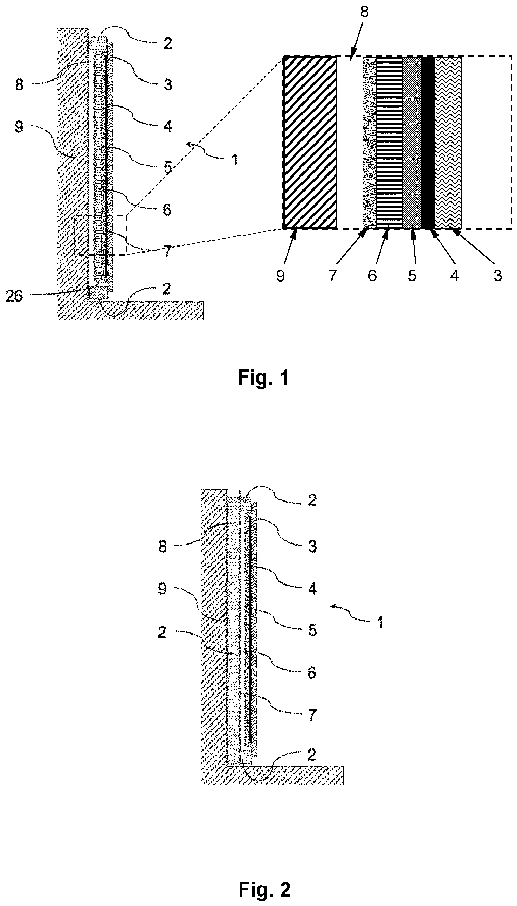

Fig. 1     eine zweidimensionale Ansicht einer ersten Ausgestaltung eines erfindungsgemäßen Temperierungssystems 1, wobei die innere Luftschicht 6 zwischen

-dem Verbund, der aus einem zur Gebäudehülle bzw. zur Wand 9 gerichteten Heizelement 4, einem Wärmeträger 3 und einem Wärmespeicher 5 aufgebaut ist, wobei der gesamte Verbund in wärmeleitendem Kontakt steht, und

-einem beidseitig IR reflektierendem Isolations- und/oder Reflexionselement 7, welches als Deckhaut auf einem offenen Wabenkern 26 aufgebracht ist, welcher im mechanischen Verbund mit den Wärmespeicher (5) steht,

ausgebildet ist, wobei sich innerhalb des Wabenkerns (26) die innere Luftschicht 6 ausbildet, und wobei der gesamte Verbund 3, 4, 5 über ein einlagiges Abstandselement 2 an der Gebäudehülle bzw. Wand 9 befestigt oder befestigbar ist, wobei sich durch das Abstandselement 2 zwischen Isolations- und/oder Reflexionselement 7 und Gebäudehülle bzw. Wand 9 eine äußere Luftschicht 8 ausbildet.

Fig. 2     zeigt als geschnittene zweidimensionale Ansicht ein zweite Ausgestaltung des erfindungsgemäßen Temperierungssystems 1, bei dem ein beidseitig IR reflektierendes Isolations- und/oder Reflexionselement 7 vollflächig auf einem Abstandshalters 2, der auf einer Gebäudehülle oder Wand 9 fixiert ist, befestigt wird oder befestigt ist, wobei sich durch den vertikal aufgebrachten Abstandshalter 2 eine äußere Luftschicht 8 zwischen dem Isolations- und/oder Reflexionselement 7 und der Gebäudehülle bzw. Wand 9 bildet, und wobei ein Verbund,

-der aus einem zur Gebäudehülle bzw. Wand 9 gerichteten Heizelement 4, einem Wärmeträger 3 und einem Wärmespeicher 5 gebildet ist, und

-der gesamte Verbund in wärmeleitendem Kontakt steht,

auf einem Abstandselement 2 befestigt wird oder befestigbar ist, wobei sich zwischen dem Isolations- und/oder Reflexionselement 7 und dem Verbund eine innere Luftschicht 6 bildet.

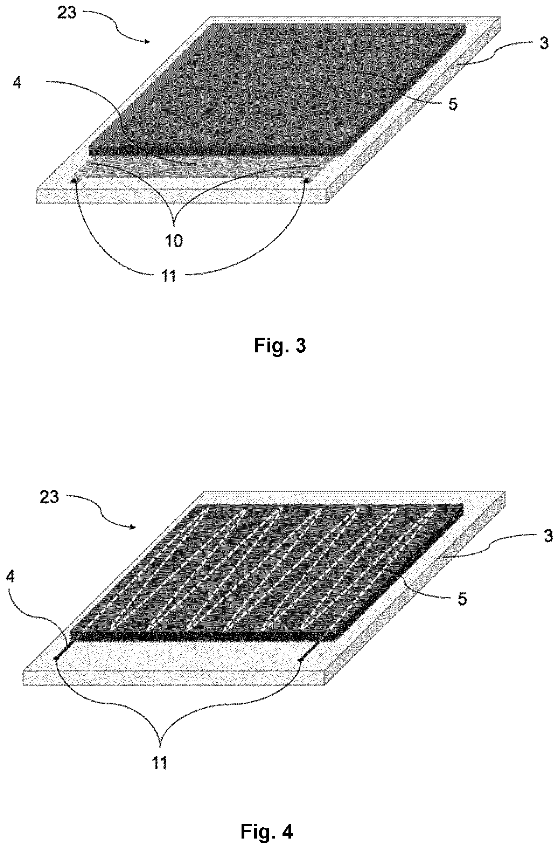

Fig. 3     zeigt als teilweise geschnittene dreidimensionale Ansicht ein Verbundelement 23 eines erfindungsgemäßen Temperierungssystems, wobei das Verbundelement aus

-einem zum Wärmespeicher 5 gerichteten Heizelement 4, welches durch eine Heizbeschichtung, die zwischen zwei Leiterbahnen 10 aufgebracht ist, ausgebildet wird,
-einem Wärmeträger 3 und
-einem Wärmespeicher 5

aufgebaut ist, wobei der gesamte Verbund in wärmeleitendem Kontakt steht, und mittels Kontaktpunkten 11 mit einer Spannungsquelle verbunden wird.

Fig. 4     zeigt als teilweise geschnittene dreidimensionale Ansicht ein Verbundelement 23 eines erfindungsgemäßen Temperierungssystems, wobei das Verbundelement aus

-einem zum Wärmespeicher 5 gerichteten Heizelement 4, welches als Alternative zu Fig. 3 durch einen mäanderförmigen Heizdraht gebildet wird,
-einem Wärmeträger (3) und
-einem Wärmespeicher (5)

aufgebaut ist, wobei der gesamte Verbund in wärmeleitendem Kontakt steht, und mittels Kontaktpunkten 11 mit einer Spannungsquelle verbunden wird.

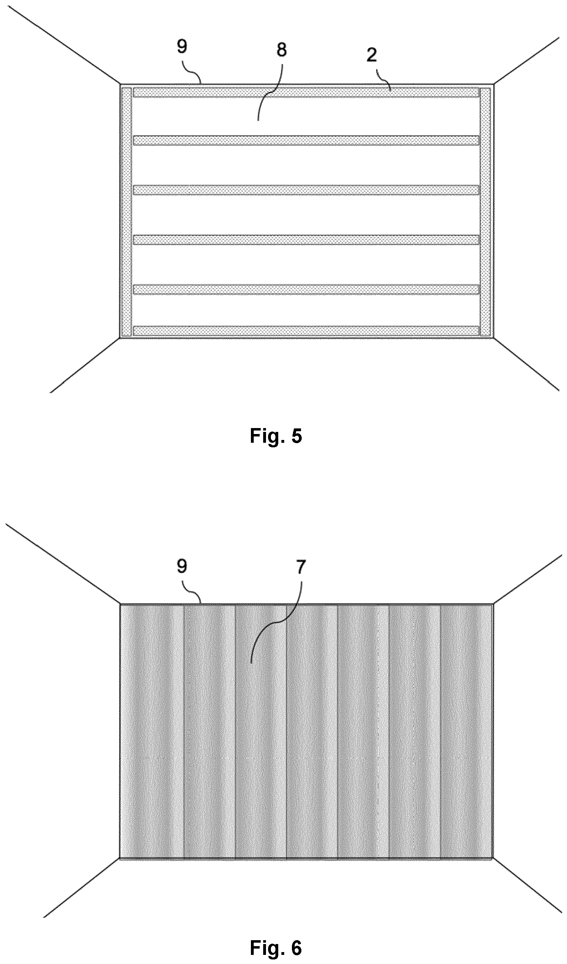

In Fig. 5 bis Fig. 8 wird schematisch ein Verfahren zur Installation des erfindungsgemäßen Temperierungssystems aus Fig. 1 mit einem Verbundelement dargestellt.

Fig. 5     zeigt den ersten Schritt, bei dem ein Abstandselement 2, beispielsweise eine Lattung aus imprägnierten Kanthölzern, als Unterkonstruktion auf eine Gebäudehülle bzw. eine Wand 9 aufgebracht wird und dadurch eine äußere Luftschicht 8 bildet.

Fig. 6     zeigt als nächsten Schritt das Aufbringen des Isolations- und/oder Reflexionselements 7 auf die Unterkonstruktion aus Fig. 5. Das Isolationsund/oder Reflexionselement 7 ist beidseitig IR-reflektierend ausgestattet, sodass Strahlungswärme, die von dem Verbundbauteil emittiert wird, in den Raum zurückreflektiert wird, um Strahlungswärmeverluste über die Gebäudehülle bzw. über die Wand 9 zu reduzieren sowie die sommerliche Aufheizung eines Raumes durch Rückreflexion exogener Strahlungsenergie, wie beispielsweise Solarstrahlung, Diffusstrahlung, Umgebungsstrahlung und dergleichen, zur Gebäudeaußenhülle 9 zu vermeiden.

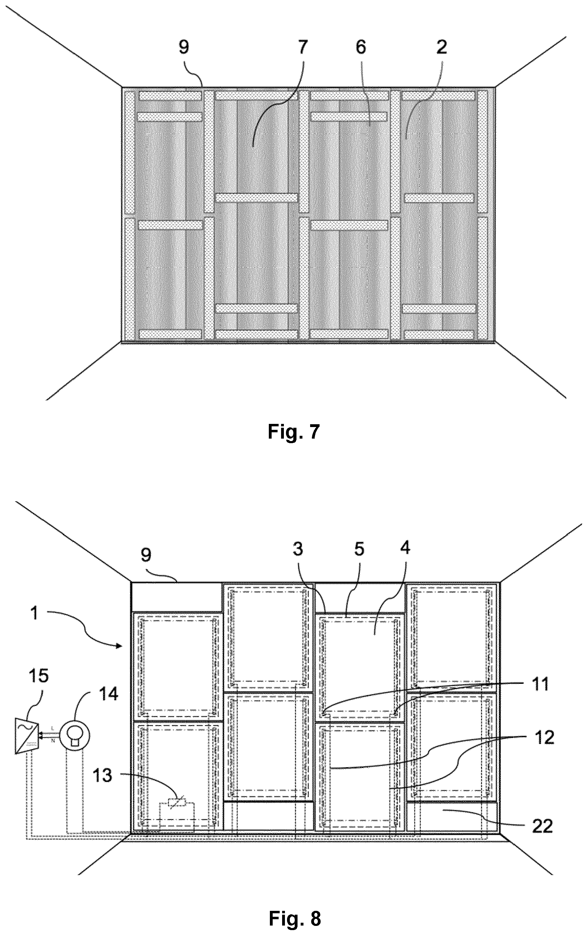

Fig. 7     zeigt schematisch, wie auf einem Isolations- und/oder Reflexionselement 7 ein weiteres Abstandselement 2, beispielsweise eine Lattung aus imprägnierten Kanthölzern, aufgebracht wird, wodurch ein innerer Luftspalt 6 geschaffen wird.

Fig. 8 zeigt das erfindungsgemäße Temperierungssystem 1 nach einer Installation auf der Innenwand einer Gebäudehülle 9. Das Verbundelement 23 ist gemäß Fig. 3 aufgebaut und besteht aus dem zur Gebäudehülle 9 gerichteten Heizelement 4, einem Wärmeträger 3, der beispielsweise eine 10 mm Gipsfaserplatte sein kann, und einem Wärmespeicher 5. Der gesamte Verbund steht in wärmeleitendem Kontakt, welcher mittels Verschrauben auf das Abstandselement fixiert wird. Die Wandbereiche, die nicht mit dem Verbundelement belegt sind, werden mittels Paneele, etwa 10 mm dicke Gipsfaserpaneele 22, aufgefüllt. Die leitenden Verbindungen 12 sind über Steck- oder Lötverbindungen mit den Kontaktierungspunkten 11 verbunden und zur Beaufschlagung der Spannung an eine z.B. berührungssichere 36 VDC Gleichstrom-Spannungsversorgung 15 angeschlossen. Die Regelung der Heizfunktion erfolgt über einen rückseitig auf dem Verbundelement aufgebrachten Temperatursensor 13 und einer über einen Thermostat 14 einstellbaren Schaltdifferenz (Hysterese), welcher in Abhängigkeit von der mittels des Temperatursensors 13 gemessenen Oberflächentemperatur die Spannungsversorgung 15 aktiviert oder deaktiviert.

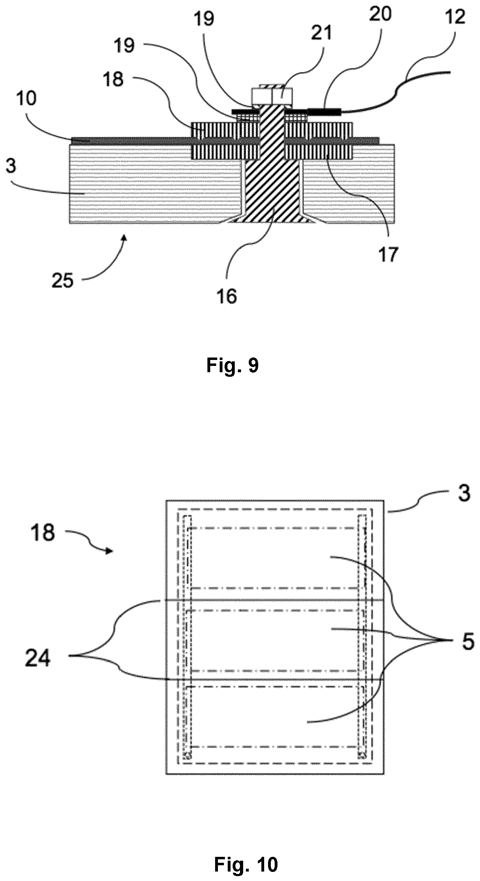

Fig. 9 zeigt ein Kontaktierungssystem 25 zur elektrischen Kontaktierung des erfindungsgemäßen Temperierungssystems, welches insbesondere bei Wärmeträgern 3 Verwendung findet, die aufgrund von feuchtigkeitsbedingten Veränderungen in ihrer Materialstärke quellen oder schwinden. Die Leiterbahn 10 liegt an den Kontaktierungspunkten zwischen einer auf dem Wärmeträger 3 bündig aufliegenden Kontaktscheibe 17 und einer Kontaktscheibe mit Zähnen 18, wobei diese durch das Verschrauben des Kontaktierungsbolzens 16 mit der Gewindemutter 21 dauerhaft kraftschlüssig verpresst werden. Die Besonderheit des Kontaktierungssystems liegt darin, dass der Kontaktierungsbolzen 16 innerhalb des Wärmeträgers 3 leicht schwimmend ausgestaltet ist und durch seinen Aufbau einen kontinuierlichen Kraftschluss mit der Kontaktscheibe bildet. Die Kontaktscheibe mit Zähnen 18 weist zumindest 5 Zähne auf der zur Leiterbahn 10 gerichteten Seite auf. Die Zähne werden beim Verschrauben des Kontaktierungsbolzens 16 mit der Gewindemutter 21 in die Leiterbahn 10 verpresst, wodurch der elektrische Übergangswiderstand bei Beaufschlagung der Spannung der Spannungsquelle 15 minimiert wird. Zwischen der Kontaktscheibe mit Zähnen 18 und der Gewindemutter 21 sind noch Unterlegscheiben 19 und zwischen diesen ein Kabelschuh 20 eingelegt, um eine sichere elektrische Kontaktierung zu gewährleisten. Die Verbindung zwischen Kabelschuh 20 und leitender Verbindung 12 erfolgt in an sich bekannter Weise.

Fig. 10 zeigt eine zweidimensionale schematische Darstellung des Verbundelements 18 des erfindungsgemäßen Temperierungssystems, bei dem beispielsweise drei Heizelemente 5, die durch eine elektrisch leitfähige Beschichtung realisiert sind, auf einem Wärmeträger 3 aufgebracht sind. Die visuellen Schnittlinien 24 erlauben sowohl eine definiert Veränderung der elektrischen Anschluss- als auch der Wärmeleistung des Verbundelements 18 während der Installation durch den Fachmann.

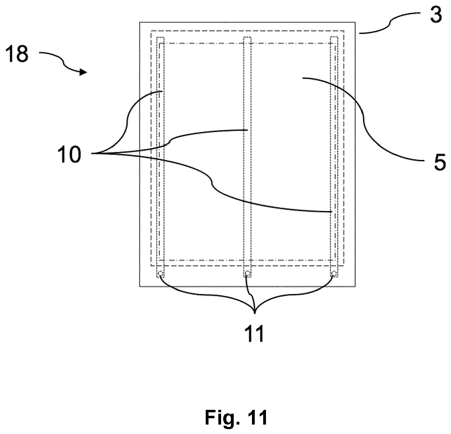

Fig. 11 zeigt eine zweidimensionale schematische Darstellung des Verbundelements 18 des erfindungsgemäßen Temperierungssystems mit drei Leiterbahnen 10 eines Heizelements 5, welches durch eine auf einem Wärmeträger 3 aufgebrachte elektrisch leitfähige Beschichtung gebildet wird. Dadurch lässt sich die Breite eines Heizelements 5 durch eine weitere elektrisch leitfähige Beschichtung erweitern. Zudem kann durch Variation der Beaufschlagung der Kontaktpunkte 11 mit der elektrischen Spannung der Spannungsquelle 15 sowohl eine definierte Veränderung der elektrischen Anschluss- als auch der Wärmeleistung des Verbundelements 18 während der Installation durch den Fachmann realisiert werden.

Das erfindungsgemäße Temperierungssystem sieht ein Verbundelement bzw. Verbundbauteil vor, welches als Verbund aus einem Heizelement, einem Wärmeträger und einem Wärmespeicher aufgebaut ist, wobei der gesamte Verbund in wärmeleitendem Kontakt steht, wobei sowohl dem Wärmespeicher als auch dem Wärmeträger während des Aufheizvorgangs über das Heizelement Wärme zugeführt wird. Die Temperatur der zur Raumseite grenzenden Oberfläche des Verbundbauteils liegt in einer bevorzugten Ausführung zwischen 20°C und 50°C und ist im zugänglichen Bereich einer Wand auf 40°C sowie im Bodenbereich auf 30°C begrenzt.

Der Wärmeträger kann auf jeglichem wärmeleitfähigen jedoch elektrisch isolierendem Substrat beruhen, wobei dieses bevorzugt nichtbrennbar ist und einen Brennwert von unter 3MJ/kg aufweisen sollte. Die Abmessungen des Wärmeträgers sind primär von der Dimension des zu temperierenden Raumes abhängig. Zur Vermeidung von Raumverlusten und um schnelle Aufheizraten zu erlauben, entspricht der Wärmeträger in seiner Dicke D denen von im Innenausbau gängigen Materialstärken, vorzugsweise z.B. D = 10 mm, 15 mm, 20 mm oder davon abweichende Dicken, und erlaubt in seiner Länge L und Breite B die handwerkliche Installation durch eine oder zwei Fachkräfte und entspricht denen von im Innenausbau gängigen Materialabmaßen, vorzugsweise z.B. L = 50 cm, 75 cm, 100 cm, 150 cm, 200 cm und B = 50 cm, 75 cm, 100 cm, 150 cm, 200 cm oder davon abweichende Längen und Breiten.

Der Wärmeträger steht in wärmeleitfähigem Verbund mit dem Heizelement, wobei das Heizelement während des Aufheizvorgangs den Wärmeträger aufheizt, welcher die eingeleitete Wärme primär in Form von infraroten Wellen z.B. in einen Raum emittiert. Die beispielhaft im Raum befindlichen festen Körper, wie Lebewesen oder Gegenstände nehmen die Strahlung auf und geben Sie als Wärme an den Raum ab.

Auf dem Wärmeträger können mindestens ein einzelnes aber auch mehrere Heizelemente angeordnet sein. Das Heizelement kann durch verschiedenste Bauarten, wie z.B. flüssigkeitsgeführte Rohrleitungen, Textilien mit integrierten elektrischen Heizdrähten, elektrischen Heizdrähten, elektrisch leitfähige Folien, elektrisch leitfähige Fasern oder elektrisch leitfähige mäanderförmige oder bevorzugt vollflächig aufgebrachte Beschichtung, realisiert sein und auf der raumabgewandten Fläche oder auf der raumzugewandten Fläche aufgebracht oder in den Wärmeträger eingebettet (integriert) sein.

In einer bevorzugten Ausführungsform, insbesondere für ein Verbundbauteil für die Wand zum Beheizen eines Raumes, ist der elektrische Widerstand des Heizelementes niederohmig, sodass dieses mit einer berührungssicheren Schutzkleinspannung von 1 V bis 25 V Wechselspannung oder 1 V bis 60 V Gleichspannung, bevorzugt 36 V Gleichspannung betrieben werden kann.

Der mechanische sowie wärmeleitfähige Verbund zwischen dem Wärmeträger und dem Heizelement kann durch gängige Weisen hergestellt werden, wie z.B. Klemmverbindung bei Rohrleitungen, verkleben, verschrauben, verpressen bei Textilien mit integrierten elektrischen Heizdrähten oder elektrischen Heizdrähten oder elektrisch leitfähige Folien oder elektrisch leitfähige Fasern, sowie Drucktechnologien bei leitfähigen Beschichtungen.

Bei einer bevorzugten Verwendung von elektrisch leitfähigen Beschichtungen als Heizelement sind zur Beaufschlagung der elektrischen Energie mindestens zwei parallel zueinander laufende stromführende Leiterbahnen vorgesehen. Die Leiterbahnen sind mindestens über die gesamte Länge einzelner oder mehrerer Heizelemente aufzubringen, damit das Heizelement über die ganze Fläche mit Strom durchflossen werden kann und sich im oberen und/oder unteren Randbereich des Heizelementes keine Hotspots ausbilden können.

Zur Maximierung der Wärmestrahlungsleistung wird nach dem Stefan Boltzmannschen Strahlungsgesetz der Flächenanteil des Heizelementes im Bezug auf die seitlichen Abmessungen des Verbundbauteils möglichst vollflächig dargestellt. In einer bevorzugten Fortführung wird zur Gestaltung des Heizelementes eine elektrisch leitfähige Beschichtung, etwa eine Kohlenstoffbeschichtung, verwendet. Der Flächenanteil des Heizelementes kann hier z.B. 50% betragen, bevorzugt zumindest 60%, bevorzugt zumindest 70%, bevorzugt zumindest 80%, noch bevorzugt zumindest 90%.

Die Leiterbahnen können aus verschiedenen elektrisch leitfähigen Materialien wie Kupfer, Silber oder anderen Legierungen bestehen und in an sich bekannten Verfahren wie z.B. drucken, sprühen, rakeln, verpressen oder kleben sowohl unter der leitfähigen Beschichtung auf dem Wärmeträger sowie auch auf der leitfähigen Beschichtung aufgebracht werden. Die Dimensionierung und Materialauswahl der Leiterbahnen erfolgt unter Berücksichtigung der angelegten Spannung und elektrischen Leistung. Die Leiterbahnen haben eine erforderliche Stromtragfähigkeit aufzuweisen, um eine sichere Beaufschlagung eines einzelnen oder mehrerer mit den Leiterbahnen verbundenen Heizelementen mit der Spannung zu gewährleisten.

Die Breite der Leiterbahnen ist so zu wählen, dass das Innenmaß zwischen den Leiterbahnen größer Null ist. Zu Montagezwecken ist ein Abstand von den Außenkanten der Leiterbahnen zu den Randbereichen des Wärmeträgers von mindestens 1 cm zu allen Seiten vorzusehen.

Bei einer bevorzugten Ausführungsform mit leitfähiger Beschichtung wird zur Beaufschlagung des Heizelements mit der Spannung jeweils ein selbstklebendes Kupferband mit einer Breite von 10 bis 40 mm parallel zueinander verlaufend als Leiterbahn auf einen im Innenausbau gängigen zweidimensionalen Wärmeträger, wie z.B. eine 10 mm dicke Gipsfaserplatte, aufgebracht und die elektrisch leitfähige Beschichtung mittels bekannter Druckverfahren, z.B. Flachbettsiebdruck, Sprühen oder Rakeln auf dem Wärmeträger aufgetragen, wobei diese die Kupferbahnen in der Breite mindestens überdeckt. Die Dicke (D) des Kupferbandes beträgt in dieser Ausführungsform bevorzugt 50 - 100 $\mu$m.

In einer weiteren Fortbildung wird auf z.B. der raumabgewandten Seite eines Wärmeträgers (z.B. eine Gipsfaserplatte mit einer Länge L = 1000 mm, Breite B = 750 mm und Dicke D = 10 mm und einem Emissionsgrad $\varepsilon$ von 0,92) eine leitfähige Beschichtung (z.B. auf Kohlenstoffbasis, mit 75% Heizflächenanteil und einem elektrischen Widerstand R = 20 Ohm) mittels der Kontaktpunkte einer Leiterbahn (z.B. mit einer Breite B = 25 mm und einer Dicke D = 0,05 mm) an eine Spannung von 36 Volt Gleichstrom angeschlossen, wodurch nach dem Stefan Bolzmannschen Strahlungsgesetz bei einer raumseitigen Oberflächentemperatur von 40°C eine Wärmestrahlungsleistung $Q_w$ von ca. 300W/m$^2$ realisiert wird, während die elektrische Anschlussleistung P lediglich ca. 117W/m$^2$ beträgt. Hieraus erschließt sich auch der große Vorteil von Flächenheizsystemen gegenüber alternativen Heizsystemen.

In einer Ausführungsform sieht der Verbundbauteil mehr als ein (wie mindestens 2 bis 20, oder mehr) Heizelemente auf einem Wärmeträger vor, wobei individuelle Heizelemente vorzugsweise durch z.B. visuelle Markierungslinien auf der Vorderseite des Wärmeträgers kenntlich gemacht sind. Die Markierungslinien dienen als Hilfsmittel zur Verkleinerung des Verbundbauteils, was insbesondere den Vorteil hat, dass bei einer Verkleinerung des Verbundbauteils während der Installation eine genaue Kalkulation der elektrischen Anschlussleistung, der Heizleistung sowie der Wärmestrahlungsleistung auf Basis der Anzahl der verbliebenen Heizelemente durch den qualifizierten Installateur gewährleistet ist.

Die Kontaktierung der Leiterbahnen mit der Spannungsquelle kann mit z.B. elektrischen Leitungen erfolgen, wobei durch eine an sich bekannte Weise (z.B. Steckverbindung, Lötverbindung, etc.) eine dauerhaft sichere leitende Verbindung zwischen der elektrischen Leitung und der Leiterbahn sowie ein gesicherter mechanischer Verbund (z.B. durch Klemmverbindung, Steckverbindung, Klebeverbindung) zwischen dem elektrischen Leiter, der Leiterbahn und dem Wärmeträger zu gewährleisten ist.

In einer Ausführungsform kann eine elektrische Leitung über eine Lötverbindung mit der Leiterbahn elektrisch kontaktiert, der Lötpunkt z.B. mit einer Vergussmasse elektrisch isoliert und die elektrische Leitung über Zugentlastungsschellen mit dem Wärmeträger mechanisch verbunden werden, wodurch z.B. ein Abreißen der Leiterbahn durch fahrlässige Handhabung der elektrischen Leitung vermieden wird.

In einer weiteren Ausführungsform mit z.B. elektrisch leitfähiger Beschichtung kann zur Beaufschlagung der Spannung auf das Heizelement ein selbstklebendes Kupferband parallel zueinander verlaufend als Leiterbahn auf einen im Innenausbau gängigen zweidimensionalen Wärmeträger, wie z.B. einer 10 mm dicken Gipsfaserplatte, aufgebracht werden. An den jeweiligen Kontaktierungspunkten der Leiterbahnen weist der Wärmeträger ein durchgehendes Loch auf, welches z.B. durch eine Bohrung geschaffen wurde. Mittig zum Loch zwischen Leiterbahn und Wärmeträger wird eine gelochte Kontaktscheibe bündig zum Wärmeträger eingelassen, die in ihren Abmessungen mindestens der Breite der Leiterbahn entspricht. Von der dem aufgebrachtem Heizelement abgewandten Seite des Wärmeträgers wird ein Verbindungselement z.B. ein Kontaktierungsbolzen mit Gewinde, durch das Loch in den Wärmeträger eingeführt. Es ist von besonderer Bedeutung, dass der Kontaktbolzen einen ungehinderten Anpressdruck auf die Kontaktscheibe ausübt und auf der Einsteckseite vorzugsweise bündig mit dem Wärmeträger abschließt. Auf der dem Heizelement zugewandten Seite werden auf die Kontaktbolzen, vorzugsweise in der nachfolgenden Reihenfolge

(1) eine weitere gelochte Kontaktierungsscheibe, die zur besseren elektrischen Verbindung mit der Leiterbahn eine Verzahnung aufweist und in Ihren Abmessungen mindestens der Breite der Leiterbahn entspricht,

(2) ggf. zur sicheren mechanischen Fixierung sowie zur elektrischen Kontaktierung eine Unterlegscheibe, und

(3) zur sicheren elektrischen Kontaktierung mit der leitenden Verbindung und der Spannungsversorgung ein Kabelschuh, und

(4) ggf. zur sicheren mechanischen Fixierung sowie zur elektrischen Kontaktierung eine Unterlegscheibe

aufgesetzt und

(5) der Verbund zur sicheren mechanischen Fixierung sowie zur elektrischen Kontaktierung durch z.B. eine Schraubenmutter verpresst.

Der Vorteil dieses Verbindungselementes liegt darin, dass auch feuchtigkeitsbedingte Veränderung der Materialstärke (durch quellen oder schwinden) des Wärmeträgers, wie z.B. einer Gipsfaserplatte, ein stetiger mechanischer wie elektrischer Kraftschluss zwischen leitender Verbindung und Leiterbahn gewährleistet ist.

Der Wärmespeicher kann durch jegliches wärmeleitfähiges jedoch elektrisch isolierendes Substrat gestaltet sein, wobei dieses bevorzugt nicht brennbar ist und einen Brennwert von unter 3MJ/kg aufweist. Der Wärmespeicher wird durch in sich bekannte Weise, wie z.B. verkleben, verschrauben, verpressen, verklemmen oder vernieten, im wärmeleitfähigen Verbund auf die innere Seite des Wärmeträgers aufgebracht, wobei es unerheblich ist, ob das Heizelement im wärmeleitfähigen Verbund mit der inneren oder äußeren Seite des Wärmeträgers ist, in diesen integriert ist oder in einer Kombination davon.

Der Wärmespeicher ist in seinen Abmessungen primär von der Dimension des Wärmeträgers sowie in seiner Dicke D von der Bautiefe des Abstandhalters abhängig. In einer bevorzugten Ausführung entspricht der Wärmeträger zur Vermeidung von Raumverlusten in seiner maximalen Dicke D denen von im Innenausbau, insbesondere der Verlattung von Trockenbauplatten, gängigen Aufbautiefen, z.B. D = 5 mm, 10 mm, 15 mm, 20 mm oder Abweichungen davon.

Der Wärmespeicher ist in Draufsicht horizontal und vertikal mittig über einem Heizelement angebracht und überragt dieses vorzugsweise vollflächig. Die minimale Abdeckung entspricht in seiner Fläche mindestens einer Teilfläche des Heizelementes von zumindest 50%, bevorzugt zumindest 60%, bevorzugt zumindest 70%, bevorzugt zumindest 80%, noch bevorzugt zumindest 90%. Zu Montagezwecken ist ein Abstand von den Außenkanten des Wärmespeichers zu den Randbereichen des Wärmeträgers von mindestens 1 cm zu allen Seiten vorzusehen.

Die spezifische Wärmekapazität des Wärmespeichers liegt bevorzugt über der des Wärmeträgers. Eine geeignete Wärmekapazität kann beispielsweise zumindest 1.000 J/kgK, bevorzugt zumindest 2.000 J/kgK, bevorzugt zumindest 3.000 J/kgK, bevorzugt zumindest 4.000 J/kgK, noch bevorzugt über 4.000 J/kgK betragen.

In einer Ausführungsform mit einem Brennwert des Wärmespeichers von über z.B. 3MJ/kg, wobei dieser in direktem wärmeleitfähigem Kontakt mit dem Heizelement stehen würde, ist zwischen dem Heizelement und dem Wärmespeicher eine Brandbarriere zu verwenden, welche in Ihrer Fläche mindestens der Fläche des Wärmespeichers entspricht. Die Brandbarriere kann aus jeglichem wärmeleitfähigen jedoch nicht brennbaren Material wie z.B. Glasfasermatten, Wärmespachtel oder anderen Beschichtungen bestehen. Die Brandbarriere kann je nach Ausführung mit an sich bekannter Weise auf das Heizelement oder den Wärmespeicher aufgebracht werden oder zwischen das Heizelement und den Wärmespeicher gelegt werden. Die Dicke (D) der Brandbarriere ist minimal gehalten, beispielsweise höchstens 2 mm, bevorzugt höchstens 1 mm, noch bevorzugt kleiner 1 mm.

In einer bevorzugten Ausführungsform erlaubt das spezifische Gewicht der einzelnen Komponenten des Verbundbauteils, welches als Verbund aus einem Heizelement, einem Wärmeträger und einem Wärmespeicher aufgebaut ist, wobei der Verbund in wärmeleitendem Kontakt steht, die handwerkliche Installation des Verbundbauteiles durch eine oder zwei Fachkräfte.

In einer Ausführungsvariante wird der Wärmespeicher durch einen Latentwärmespeicher, auch Phasenwechselspeicher (englisch Phase Change Material (PCM)) gebildet. An sich bekannte PCM-Speichermaterialien sind zum Beispiel Paraffine oder Salzhydrate. Während des Aufheizvorgangs des Heizelementes durchläuft der Wärmespeicher, der im Verbund im wärmeleitendem Kontakt mit dem Heizelement und dem Wärmeträger steht, bei beispielsweise 25°C oder 26°C oder 27°C oder 28°C oder 29°C oder 30°C einen Phasenwechsel wobei er seinen Aggregatzustand wechselt und die vom Heizelement und Wärmeträger ausgehende thermische Energie als latente Wärme speichert. Nachdem mittels der Schaltdifferenz oder aus anderen Gründen das Heizelement inaktiv geschaltet wird, befindet sich der Verbund aus einem Heizelement, einem Wärmeträger und einem Wärmespeicher, wobei der gesamte Verbund in wärmeleitendem Kontakt steht, in der Abkühlphase.

Während der Abkühlphase des Verbunds durchläuft der PCM-Speicher bei beispielsweise 45°C oder 44°C oder 43°C oder 42°C oder 41°C oder 40°C oder 39° oder 38°C oder 37°C oder 36°C oder 35°C einen Phasenwechsel, wobei er wieder in seinen ursprünglichen Aggregatzustand wechselt und die Abkühlphase des Verbunds signifikant verzögert. Der besondere Vorteil des erfinderischen Verbundbauteils mit PCM basiertem Wärmespeicher liegt in seiner hohen Wärmespeicherkapazität und damit verbundenen Heizeffizienz.

Der besondere Vorteil des Heizelements im Verbund mit einem Wärmeträger und einem Wärmespeicher, wobei der gesamte Verbund in wärmeleitendem Kontakt steht, beruht auf eine signifikanter Verlängerung der Schaltzyklen innerhalb der eingestellten Hysterese, da sich die Abkühlzeit des Verbundbauteils bei Inaktivität des Heizelements signifikant verzögert und sich der Nettobetrieb und somit der Energiebedarf zum Heizen, beispielsweise eines Raumes eines Gebäudes, reduziert. Messreihen haben hier eine Einsparung von über 30% im Vergleich zu herkömmlichen Heizsystemen gezeigt.

Hervorzuheben ist noch, dass durch den Einsatz des Heizelements im Verbund mit einem Wärmeträger und einem Wärmespeicher, wobei der Verbund in wärmeleitendem Kontakt steht, das erfindungsgemäße Verbundbauteil im Vergleich zu herkömmlichen Heizsystemen, bei gleicher Anschlussleistung eine höhere Oberflächentemperatur und somit nach dem Stefan Boltzmannschen Strahlungsgesetz eine wesentliche höhere Wärmestrahlungsleistung $Q_w$ erzielt wird und als Folge weniger Energie zum Beheizen eines Raumes, wie den Raum eines Gebäudes erfordert.

Ein weiterer Vorteil der erfinderischen Lösung liegt darin, dass das Temperierungssystem den sommerlichen Hitzeschutz z.B. eines Raumes unterstützt, insbesondere wenn das Verbundbauteil über Abstandshalter auf der Innenseite eines Raumes an eine Außenwand, Dachschräge oder Decke einer Gebäudehülle angebracht ist. Der zur Gebäudehülle gerichtete Wärmespeicher sorgt

- für eine Phasenverschiebung, d.h. eine zeitliche Verschiebung, in der die Tageshöchsttemperatur die Gebäudehülle und das Temperierungssystem von der Außenseite zur Innenseite durchwandert und

- ein Puffern der von außen wirkenden Wärmeenergie, die nur in reduzierten Mengen an den Innenraum weitergegeben wird (Amplitudendämpfung). Eine optimale Phasenverschiebung liegt im Bereich von 10-12 Stunden, da die Wärme, die in den Abendstunden im Innenbereich ankommt, mit der Kühle des Abends abgelüftet werden kann.

In einer Ausführungsform können weitere Komponenten Teil der erfindungsgemä-ßen Temperierungssystems sein. So können beispielsweise thermische Gap Filler in einem Verbundelement für maximale Toleranz und maximalen Spaltausgleich sorgen und somit thermische Ankopplungsverluste zwischen den einzelnen Komponenten minimieren und als Folge Energieverluste reduzieren.

Das Isolations- und/oder Reflexionselement wird vorzugsweise kontaktfrei zwischen z.B. einer Gebäudehülle und dem Verbundbauteil angebracht. Um eine wärmestrahlungsreflektierende Eigenschaft als Isolations- und/oder Reflexionselement zu gewährleisten, ist ein dauerhafter Emissionsgrad $\varepsilon$ von zumindest kleiner 0,5, bevorzugt zumindest kleiner 0,1, noch bevorzugt zumindest kleiner 0,05 von Vorteil.

Um

- Strahlungswärme, die von dem Verbundbauteil emittiert wird, in einen Raum zurückzureflektieren und somit Strahlungswärmeverluste über die Gebäudehülle zu reduzieren und

- eine sommerliche Aufheizung eines Raumes durch Rückreflexion exogener Strahlungsenergie, wie beispielsweise Solarstrahlung, Diffusstrahlung, Umgebungsstrahlung und dergleichen, zur Gebäudeaußenhülle zu vermeiden,

ist das Isolations- und/oder Reflexionselement beidseitig reflektierend ausgestaltet und über Abstandselemente vorzugsweise kontaktfrei mit angrenzenden inneren wie äußeren Luftschichten zwischen Gebäudehülle und dem Verbundbauteil angebracht.

In einer einfachen Ausführung besteht das Isolations- und/oder Reflexionselement aus einer hochglänzenden Metallfolie, beispielsweise aus Aluminium, die bevorzugt eine elektrische Isolationsschicht aufweist und beispielsweise mit einer Polyesterschicht gegen Anlaufen geschützt ist, um ein zeitliches Verblassen des Isolations- und/oder Reflexionselements und somit einer Verschlechterung der Wärmestrahlungsreflexion entgegenzuwirken. Die Dicke D eines solchen Isolations- und/oder Reflexionselement liegt beispielsweise bei D = 0,1 mm bis 0,9 mm.

In einer bevorzugten Ausführung ist das Isolations- und/oder Reflexionselement eine Verbundfolie, die zumindest eine, bevorzugt zumindest zwei, bevorzugt zumindest drei, bevorzugt zumindest vier, bevorzugt zumindest fünf, noch bevorzugt zumindest mehr als fünf IR-reflektierende Schichten und zumindest eine, bevorzugt zumindest zwei, bevorzugt zumindest drei, bevorzugt zumindest vier, bevorzugt zumindest fünf, noch bevorzugt zumindest mehr als fünf Luftpolsterschichten aufweist. Die Verwendung eines solchen Isolations- und/oder Reflexionselements erlaubt es zusätzlich zu den genannten IR-Reflexionseigenschaften den Wärmedurchlasswiderstand, z.B. eines Gebäudes, zu erhöhen und damit den Energiebedarf zum Temperieren, z.B. eines Raumes, zu reduzieren. Die Dicke D eines Isolations- und/oder Reflexionselements mit IR-Reflexionseigenschaften sowie thermischen Isolationseigenschaften beträgt zumindest 5 mm, bevorzugt zumindest 10 mm, bevorzugt zumindest 20 mm, bevorzugt zumindest 50 mm, bevorzugt zumindest 100 mm, noch bevorzugt über 100 mm.

In einer Ausführung der erfinderischen Lösung ist das Isolations- und/oder Reflexionselement im Verbund mit dem Verbundelement auf der zur Gebäudehülle bzw. zur Wand gerichteten Seite des Wärmespeichers aufgebracht. Das Isolations-und/oder Reflexionselement und der Wärmespeicher stehen in dieser Ausführung zur Aufrechterhaltung der IR-Reflexionseigenschaften nicht im vollflächigem Verbund, sondern sind über beispielsweise einen offenen Wabenkern getrennt, wobei das Isolations- und/oder Reflexionselement auf der dem Wärmespeicher abgewandten Seite des Wabenkerns als Deckhaut des Wabenkerns aufgebracht ist. Der Wabenkern dient damit einerseits als Abstandselement zwischen dem Wärmespeicher und dem Isolations- und/oder Reflexionselement. Andererseits wird durch den Wabenkern die innere Luftschicht bzw. der innere Luftspalt zwischen dem Wärmespeicher und dem Isolations- und/oder Reflexionselement gebildet.

Der Wabenkern kann durch an sich bekannte Weisen aus beispielsweise Pappe, harzgetränktem Papier, Faserkunststoff oder dünnen Aluminiumfolien hergestellt werden und weist eine Dicke D von beispielsweise D = 5 mm oder D = 10 mm oder D = 15 mm oder D = 20 mm auf. Der Verbund des Isolations- und/oder Reflexionselements mit dem Verbundelement erfolgt in an sich bekannter Weise, z.B. durch verkleben, klammern, verschrauben. Der Vorteil dieser Ausführung liegt in der vereinfachten wie verkürzten Installationszeit des Temperierungssystems.

Der Wabenkern kann jede offene gitter- oder wabenförmige Struktur aufweisen, wobei lediglich gewährleistet sind muss, dass der Wabenkern das Ausbilden der inneren Luftschicht bzw. des inneren Luftspalts ermöglicht.

Bei Installation auf z.B. der inneren Seite einer Außenwand eines Gebäudes kann in einer Ausführung das Isolations- und/oder Reflexionselement als diffusionsgeschlossenes Isolations- und/oder Reflexionselement ausgebildet sein, um ein Diffundieren von Feuchtigkeit aus dem warmen Innenraumluft in die Gebäudehülle und damit eine Schädigung dahinterliegender Bauteile, insbesondere von Wärmedämmverbundsystemen durch Kondenswasser zu verhindern. Die Installation der Folie auf dem Abstandselement erfolgt in von Dampfsperr- oder Dampfbremsfolien bekannter Weise z.B. durch tackern oder verkleben oder verschrauben.

Gemäß der Erfindung ist das Abstandselement derart gestaltet, dass es in einer bevorzugten Ausführung

- einen kontaktfreien Abstand des Isolations- und/oder Reflexionselement zwischen dem Verbundbauteil und der Gebäudehülle gewährleistet,

- zu den angrenzenden Seiten des Isolations- und/oder Reflexionselement eine innere sowie äußere ruhende Luftschicht bildet, und

- eine sichere mechanische Befestigung des Verbundbauteils auf der Raumseite der Gebäudehülle unterstützt.

In einer Ausgestaltung der Erfindung, beispielsweise bei Verwendung zum Temperieren eines Raumes in einem Gebäude, kann das Abstandselement aus Materialien, die von Unterkonstruktionen für den Trockenbau bekannt sind, bestehen, beispielsweise Holzprofile, wie beim Holzständerwerk, oder metallische U- oder C-Profile, wie bei Metallständerwerk, wobei die Profile beispielsweise eine Breite B von B = 30-50 mm und Dicke D von D = 20-40mm aufweisen.

In einer Ausgestaltung der Erfindung, werden

- in einem ersten Schritt eine Unterkonstruktion aus imprägnierten Kanthölzern mit B = 50 mm und D = 20 mm an Wand oder Decke und Boden befestigt,
- in einem zweiten Schritt das Reflexionselement bzw. Reflexions-Isolationselement auf die Unterkonstruktion aufgebracht, und
- in einem dritten Schritt zur Beabstandung des Verbundbauteils ein Befestigungsrahmen aus imprägnierten Kanthölzer mit z.B. B = 50 mm und D = 20 mm auf das Isolations- und/oder Reflexionselement aufgebracht und mit der Unterkonstruktion verbunden.

Die Befestigung des Abstandselementes kann auf bekannte Weise, z.B. durch Nieten, Schrauben, Klammern oder Nägeln erfolgen. Im Falle einer zusätzlichen Funktion eines Isolations- und/oder Reflexionselements als Dampfsperre oder Dampfbremse sind die hierfür bekannten Arbeitsschritte einzuhalten.

Bei Verwendung des erfindungsgemäßen Temperierungssystems an einer zur Gebäudehülle gerichteten Wand oder Decke besteht ein besonderer Vorteil des Abstandselementes in der sich ergebenden doppelten Luftschicht zwischen Gebäudehülle und Verbundbauteil, da aufgrund des mittleren Wärmedurchlasswiderstandes von R = 0,17 (m$^2$K)/W für ruhende Luftschichten zwischen Baustoffoberflächen eine Wärmeverlagerung von der Gebäudehülle ins Rauminnere sowie vom Rauminneren zur Gebäudehülle wirksam verringert wird und sich die Anforderungen und somit Kosten für Wärmedämmmaßnahmen für das Gebäude reduzieren.

Bezugszeichen

1    Temperierungssystem
2    Abstandselement
3    Wärmeträger
4    Heizelement
5    Wärmespeicher
6    Innerer Luftspalt bzw. innere Luftschicht
7    Reflexionselement bzw. Reflexions-Isolationselement
8    Äußerer Luftspalt bzw. äußere Luftschicht
9    Gebäudehülle bzw. Wand
10   Leiterbahn
11   Kontaktpunkt
12   Leitende Verbindung
13   Thermosensor
14   Regelung bzw. Thermostat
15   Gleichstrom-Spannungsversorgung
16   Kontaktierungsbolzen
17   Kontaktscheibe
18   Kontaktscheibe mit Zähnen
19   Unterlegscheibe
20   Kabelschuh
21   Gewindemutter

22   Blindpaneele
23   Verbundbauteil
24   Schnittlinie
25   Kontaktierungssystem
26   Wabenkern

**Patentansprüche**

1.  Temperierungssystem zum Temperieren eines Raumes, umfassend

    - ein Heizelement (4) mit einer dem Raum zugewandten Oberfläche und einer dem Raum abgewandten Oberfläche,
    - ein Isolations- und/oder Reflexionselement (7), das beabstandet zum Heizelement (4) und an der dem Raum abgewandten Oberfläche des Heizelements (4) angeordnet ist, sodass zwischen dem Isolations- und/oder Reflexionselement (7) und dem Heizelement (4) ein innerer Luftspalt (6) ausgebildet ist, wobei das Isolations- und/oder Reflexionselement (7) wärmeisolierend und IR-Strahlen reflektierend ausgestaltet ist, und wobei das Isolations- und/oder Reflexionselement (7) flächig ausgestaltet ist, und
    - ein erstes Abstandselement (2), das an der dem Raum abgewandten Oberfläche des Isolations- und/oder Reflexionselement (7) angeordnet ist, um zwischen dem Isolations- und/oder Reflexionselement (7) und einer Wand (9) des Raumes einen äußeren Luftspalt (8) auszubilden.

    wobei zwischen dem Isolations- und/oder Reflexionselement (7) und dem Heizelement (4) ein zweites Abstandselement (6) angeordnet ist, **dadurch gekennzeichnet, dass** das Isolations- und/oder Reflexionselement (7) beidseitig IR-Strahlen reflektierend ausgestaltet ist, und das zweite Abstandselement (6) eine offene gitter- oder wabenförmige Struktur aufweist, sodass innerhalb der offenen Gitter- oder Wabenstruktur der innere Luftspalt (6) ausgebildet wird.

2.  Temperierungssystem nach dem vorhergehenden Anspruch, wobei an der dem Raum abgewandten Oberfläche des Heizelements (4) ein Wärmespeicher (5) angeordnet ist.

3.  Temperierungssystem nach dem vorhergehenden Anspruch, wobei der Wärmespeicher (5) zwischen dem Heizelement (4) und dem Isolations- und/oder Reflexionselement (7) und beabstandet zum Isolations- und/oder Reflexionselement (7) angeordnet ist.

4.  Temperierungssystem nach einem der vorhergehenden Ansprüche, wobei an der dem Raum zugewandten Oberfläche des Heizelements (4) ein Wärmeträger (3) angeordnet ist.

5. Temperierungssystem nach Anspruch 4 und nach einem der Ansprüche 2 oder 3, wobei der Wärmeträger (3), das Heizelement (4) und der Wärmespeicher (5) in Wärme leitendem Kontakt stehen.

6. Temperierungssystem nach dem vorhergehenden Anspruch, oder nach Anspruch 4 und nach einem der Ansprüche 2 oder 3, wobei der Wärmeträger (3), das Heizelement (4) und der Wärmespeicher (5) zusammen als Verbundelement ausgestaltet sind.

7. Temperierungssystem nach dem vorhergehenden Anspruch, wobei das Isolations- und/oder Reflexionselement (7) und gegebenenfalls das zweite Abstandselement (6) Teil des Verbundelements sind.

8. Temperierungssystem nach einem der vorhergehenden Ansprüche, wobei das Heizelement (4)

   - eine leitfähige Beschichtung, die mit elektrischer Energie beaufschlagbar ist,
   - einen Heizdraht, insbesondere einen mäanderförmig verlaufenden Heizdraht,
   - eine Wasserleitung, insbesondere eine mäanderförmig verlaufende Wasserleitung, die mit Warmwasser beaufschlagbar ist,
   - und Kombination hiervon

   umfasst.

9. Temperierungssystem nach dem vorhergehenden Anspruch, wobei das Isolations- und/oder Reflexionselement (7)

   - eine hochglänzende Metallfolie, insbesondere Aluminiumfolie, oder
   - ein Verbundfolie, die zumindest eine IR-Strahlen reflektierende Schicht und zumindest eine als Luftpolster ausgestaltete Schicht aufweist,

   umfasst.

**Claims**

1. Temperature control system for controlling the temperature of a room, comprising

   - a heating element (4) having a surface facing the room and a surface facing away from the room,
   - an insulating- and/or reflecting element (7), which is arranged so as to be spaced apart from the heating element (4) and on the surface of the heating element (4) facing away from the room, so that an internal air gap (6) is formed between the insulating- and/or reflecting element (7) and the heating element (4), wherein the insulating- and/or reflecting element (7) is designed to be heat-insulating and to be reflective to IR beams and wherein the insulating- and/or reflecting element (7) is planar, and
   - a first spacer element (2), which is arranged on the surface of the insulating- and/or reflecting element (7) facing away from the room in order to form an external air gap (8) between the insulating- and/or reflecting element (7) and a wall (9) of the room,

   wherein a second spacer element (6) is arranged between the insulating-and/or reflecting element (7) and the heating element (4), **characterized in that** the insulating- and/or reflecting element (7) is designed to be reflective to IR beams on both sides, and

   the second spacer element (6) has an open lattice or honeycomb structure so that the internal air gap (6) is formed within the open lattice or honeycomb structure.

2. Temperature control system according to the preceding claim, wherein a heat accumulator (5) is arranged on the surface of the heating element (4) facing away from the room.

3. Temperature control system according to the preceding claim, wherein the heat accumulator (5) is arranged between the heating element (4) and the insulating- and/or reflecting element (7) and spaced apart from the insulating-and/or reflecting element (7).

4. Temperature control system according to any of the preceding claims, wherein a heat carrier (3) is arranged on the surface of the heating element (4) facing the room.

5. Temperature control system according to claim 4 and according to any of claims 2 or 3, wherein the heat carrier (3), the heating element (4) and the heat accumulator (5) are in thermally conductive contact.

6. Temperature control system according to the preceding claim, or according to claim 4 and according to any of claims 2 or 3, wherein the heat carrier (3), the heating element (4) and the heat accumulator (5) are formed together as a composite element.

7. Temperature control system according to the preceding claim, wherein the insulating- and/or reflecting element (7) and optionally the second spacer element (6) are part of the composite element.

8. Temperature control system according to any of the preceding claims, wherein the heating element (4) comprises

- a conductive coating to which electrical energy can be applied,
- a heating wire, in particular a meanderingly extending heating wire,
- a water pipe, in particular a meanderingly extending water pipe to which hot water can be applied,
- and combinations thereof.

9. Temperature control system according to the preceding claim, wherein the insulating- and/or reflecting element (7) comprises

- a high-gloss metal foil, in particular aluminum foil, or
- a composite foil, which has at least one layer that reflects IR beams and at least one layer in the form of an air cushion.

## Revendications

1. Système de thermorégulation permettant de réguler la température d'une pièce, comprenant

- un élément chauffant (4) comportant une surface tournée vers la pièce et une surface éloignée de la pièce,
- un élément isolant et/ou réfléchissant (7) qui est disposé à distance de l'élément chauffant (4) et sur la surface de l'élément chauffant (4) éloignée de la pièce, de manière à ce qu'un entrefer (6) interne est réalisé entre l'élément isolant et/ou réfléchissant (7) et l'élément chauffant (4), dans lequel l'élément isolant et/ou réfléchissant (7) est conçu pour assurer une isolation thermique et réfléchir des rayons infrarouges, et dans lequel l'élément isolant et/ou réfléchissant (7) est conçu plat, et
- un premier élément d'espacement (2) disposé sur la surface de l'élément isolant et/ou réfléchissant (7) qui est éloignée de la pièce pour réaliser un entrefer (8) externe entre l'élément isolant et/ou réfléchissant (7) et une paroi (9) de la pièce,

dans lequel un second élément d'espacement (6) est disposé entre l'élément isolant et/ou réfléchissant (7) et l'élément chauffant (4), **caractérisé en ce que** l'élément isolant et/ou réfléchissant (7) est conçu pour réfléchir des rayons infrarouges des deux côtés, et

le second élément d'espacement (6) présente une structure ouverte en forme de grille ou d'alvéole, de manière à ce que l'entrefer (6) interne est réalisé à l'intérieur de la structure de grille ou alvéolaire ouverte.

2. Système de thermorégulation selon la revendication précédente, dans lequel un accumulateur de chaleur (5) est disposé sur la surface de l'élément chauffant (4) qui est éloignée de la pièce.

3. Système de thermorégulation selon la revendication précédente, dans lequel l'accumulateur de chaleur (5) est disposé entre l'élément chauffant (4) et l'élément isolant et/ou réfléchissant (7) et à distance de l'élément isolant et/ou réfléchissant (7).

4. Système de thermorégulation selon l'une des revendications précédentes, dans lequel un agent caloporteur (3) est disposé sur la surface de l'élément chauffant (4) qui est tournée vers la pièce.

5. Système de thermorégulation selon la revendication 4 et selon l'une des revendications 2 ou 3, dans lequel l'agent caloporteur (3), l'élément chauffant (4) et l'accumulateur de chaleur (5) sont en contact thermoconducteur.

6. Système de thermorégulation selon la revendication précédente, ou selon la revendication 4 et selon l'une des revendications 2 ou 3, dans lequel l'agent caloporteur (3), l'élément chauffant (4) et l'accumulateur de chaleur (5) sont conjointement conçus comme élément composite.

7. Système de thermorégulation selon la revendication précédente, dans lequel l'élément isolant et/ou réfléchissant (7) et éventuellement le second élément d'espacement (6) font partie de l'élément composite.

8. Système de thermorégulation selon l'une des revendications précédentes, dans lequel l'élément chauffant (4) comprend

- un revêtement conducteur qui peut être alimenté en énergie électrique,
- un fil chauffant, en particulier un fil chauffant s'étendant en forme de méandres,
- une conduite d'eau, en particulier une conduite d'eau s'étendant en forme de méandres, laquelle peut être alimentée en eau chaude,
- et une combinaison de ceux-ci.

9. Système de thermorégulation selon la revendication précédente, dans lequel l'élément isolant et/ou réfléchissant (7) comprend

- une feuille métallique à haute brillance, en particulier une feuille d'aluminium, ou
- une feuille composite qui présente au moins une couche réfléchissant des rayons infrarouges et au moins une couche conçue comme coussin d'air.

**Fig. 1**

**Fig. 2**

**Fig. 3**

**Fig. 4**

**Fig. 5**

**Fig. 6**

**Fig. 7**

**Fig. 8**

**Fig. 9**

**Fig. 10**

**Fig. 11**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 9627271 A